(19) Europäisches Patentamt
European Patent Office
Office européen des brevets

(11) **EP 3 795 433 B1**

(12) **EUROPEAN PATENT SPECIFICATION**

(45) Date of publication and mention
of the grant of the patent:
**04.09.2024 Bulletin 2024/36**

(21) Application number: **19803097.5**

(22) Date of filing: **18.03.2019**

(51) International Patent Classification (IPC):
**B60S 5/00** *(2006.01)*    **H01M 10/42** *(2006.01)*
**G05B 23/02** *(2006.01)*    **H01M 10/44** *(2006.01)*

(52) Cooperative Patent Classification (CPC):
**B60L 58/16; B60L 53/14; B60L 53/62;**
**G05B 23/0283; H01M 10/42;** B60L 2240/549;
H01M 2220/20; Y02E 60/10; Y02T 10/70;
Y02T 10/7072; Y02T 90/12; Y02T 90/14

(86) International application number:
**PCT/CN2019/078531**

(87) International publication number:
**WO 2019/218769 (21.11.2019 Gazette 2019/47)**

(54) **SERVER, POWER BATTERY MAINTENANCE METHOD, DEVICE AND SYSTEM**

SERVER, VERFAHREN, VORRICHTUNG UND SYSTEM FÜR STROMBATTERIEWARTUNG

SERVEUR, PROCÉDÉ, DISPOSITIF ET SYSTÈME D'ENTRETIEN DE BATTERIE D'ALIMENTATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.05.2018 CN 201810468705**

(43) Date of publication of application:
**24.03.2021 Bulletin 2021/12**

(73) Proprietor: **NIO (ANHUI) HOLDING CO., LTD
Economic and Technological Development Zone
Hefei
Anhui 230601 (CN)**

(72) Inventors:
• **TIAN, Weichao
Shanghai 201804 (CN)**
• **ZHAO, Jianzhi
Shanghai 201804 (CN)**
• **LIU, Yuchi
Shanghai 201804 (CN)**
• **WU, Guangtao
Shanghai 201804 (CN)**
• **ZHAO, Jincheng
Shanghai 201804 (CN)**

(74) Representative: **Patentwerk B.V.
P.O. Box 1514
5200 BN 's-Hertogenbosch (NL)**

(56) References cited:
CA-A1- 3 013 651    CN-A- 105 059 130
CN-A- 105 059 130    CN-A- 107 215 228
CN-A- 107 914 595    CN-A- 108 638 890
US-A1- 2015 268 307    US-A1- 2015 323 610
US-A1- 2017 120 766    US-A1- 2018 106 868

**Description**

**Technical Field**

The invention relates to the field of battery technologies, and in particular to a server, a traction battery maintenance method, apparatus, and system.

**Background Art**

With the rapid growth of new energy vehicles in the automotive market, the use of battery technologies to provide electric energy as a power source has become a mainstream technology for the development of new energy vehicle technologies. Generally, a battery used as a power source in a new energy vehicle is usually a battery pack composed of a plurality of battery cells, but the battery shows significant performance degradation after long-period, high-rate, and multi-depth charging and discharging cycles on the vehicle. Specifically, after the battery is charged and discharged for a period of time, voltages of various battery cells fluctuate or battery capacities thereof are unbalanced, and sometimes a battery cell may even be damaged, resulting in failure of the entire battery pack. In practical application, performance degradation of a battery comprises recoverable performance degradation and non-recoverable performance degradation. Battery maintenance can recover part of the battery capacity, extend the battery service life, and improve the battery performance.

In an existing battery maintenance scheme, a battery is maintained when a cruising time of a vehicle is significantly decreased, battery faults occur frequently, or the battery may have been at non-recoverable performance degradation. This battery maintenance scheme is a passive maintenance method and tends to shorten the battery service life. In addition, users need to go to a designated maintenance site for battery maintenance, which is not flexible. Therefore, the users are reluctant to maintain batteries, and have a poor user experience. The Chinese Patent publication CN105059130 discloses a electrokinetic cell repair system. United States patent publication US20150268307 discloses a system and method for determining performance degradation of a battery system. United States patent publication US20170120766 discloses an apparatus and method for regulating a state of charge of an electrical energy storage. The Canadian patent publication CA3013651 discloses a service life control for energy stores.

Therefore, how to propose a solution for actively maintaining a battery and improving user experience is a problem that those skilled in the art need to solve at present.

**Summary of the Invention**

In order to solve the problems in the prior art, that is, to solve the problems that a traction battery is passively maintained and the maintenance method is not flexible in the prior art, a first aspect of the invention provides a traction battery maintenance method, which comprises:

> acquiring a state of health of a traction battery;
> matching a maintenance strategy corresponding to the state of health based on a preset one-to-one correspondence between different states of health and different maintenance strategies;
> generating a maintenance scheme for the traction battery based on the maintenance strategy; and
> wherein the step of "acquiring a state of health of a traction battery" comprises:
> acquiring the state of health of the traction battery based on a change rate of a health degree of the traction battery; and
> the different states of health comprise: the state of the traction battery when the change rate of the health degree of the traction battery is greater than a preset change rate threshold, and the state of the traction battery when the change rate of the health degree of the traction battery is less than or equal to the preset change rate threshold and the health degree is a specific value, wherein the specific value comprises at least one value;
> wherein the maintenance strategy comprises performing cyclic charging and discharging on the traction battery multiple times,
> wherein a charging current, a discharging current, and the number of cycles of the cyclic charging and discharging performed multiple times depend on the state of health of the traction battery.

In a preferred implementation of the above method, the step of "performing cyclic charging and discharging on the traction battery multiple times" comprises:

> step S1: performing constant current charging on the traction battery at a preset charging current when a voltage of a battery cell in the traction battery is less than a preset voltage, and performing constant voltage charging on the traction battery when the voltage of the battery cell reaches the preset voltage, gradually reducing the charging current, and stopping charging when the charging current is less than a preset current;

step S2: performing constant current discharging on the traction battery at a preset discharging current until a state of charge of the traction battery is 0, and resting the traction battery for a certain period of time after the state of charge is 0; and

step S3: repeatedly performing steps S1 and S2 for a preset number of cycles.

In a preferred implementation of the above method, the maintenance strategy comprises:

when the change rate of the health degree of the traction battery is greater than the preset change rate threshold, the charging current is a first value, the discharging current is a second value, and the number of cycles is a first preset value in the maintenance strategy; and

when the change rate of the health degree of the traction battery is greater than the preset change rate threshold, the charging current is a first value, the discharging current is a second value, and the number of cycles is a first preset value in the maintenance strategy;

wherein the first value is greater than the third value, the second value is greater than the fourth value, and the first preset value is less than the second preset value.

In a preferred implementation of the above method, before the step of "generating a maintenance scheme for the traction battery based on the maintenance strategy", the method further comprises:

predicting a travelling path and a trip time of a vehicle based on pre-acquired historical driving data of the vehicle; and acquiring an available maintenance terminal of the traction battery based on the maintenance strategy, the travelling path, and the trip time; and

the step of "generating a maintenance scheme for the traction battery based on the maintenance strategy" further comprises: generating the maintenance scheme for the traction battery based on the maintenance strategy, the travelling path, the trip time, and the available maintenance terminal.

In a preferred implementation of the above method, before the step of "generating the maintenance scheme for the traction battery based on the maintenance strategy, the travelling path, the trip time, and the available maintenance terminal", the method further comprises:

acquiring an added value corresponding to the maintenance strategy; and

the step of "generating the maintenance scheme for the traction battery based on the maintenance strategy, the travelling path, the trip time, and the available maintenance terminal" further comprises: generating the maintenance scheme for the traction battery based on the maintenance strategy, the travelling path, the trip time, the available maintenance terminal, and the added value.

In a preferred implementation of the above method, after the step of "generating a maintenance scheme for the traction battery based on the maintenance strategy", the method further comprises:

acquiring an update instruction of the maintenance scheme, and regenerating a maintenance scheme for the traction battery based on a maintenance time and a maintenance terminal specified by the update instruction of the maintenance scheme.

In a preferred implementation of the above method, the maintenance terminal is a battery swap station or a mobile battery swap station or a vehicle repair station.

A second aspect of the invention provides a traction battery maintenance apparatus, which comprises:

an acquisition unit configured to acquire a state of health of a traction b attery;

a matching unit configured to match a maintenance strategy corresponding to the state of health based on a preset one-to-one correspondence between different states of health and different maintenance strategies; and

a generation unit configured to generate a maintenance scheme for the traction battery based on the maintenance strategy,

wherein the acquisition unit is further configured to:

acquiring the state of health of the traction battery based on a change rate of a health degree of the traction battery; and the different states of health degree comprise:

the state of the traction battery when the change rate of the health degree of the traction battery is greater than a preset change rate threshold;

and the state of the traction battery when the change rate of the health degree of the traction battery is less than or equal to the preset change rate threshold and the health degree is a specific value, wherein the specific value comprises at least one value,
wherein the maintenance strategy comprises performing cyclic charging and discharging on the traction battery multiple times,
wherein a charging current, a discharging current, and the number of cycles of the cyclic charging and discharging performed multiple times depend on the state of health of the traction battery.

In a preferred implementation of the above apparatus, the maintenance strategy further comprises:

step S1: performing constant current charging on the traction battery at a preset charging current when a voltage of a battery cell in the traction battery is less than a preset voltage, and performing constant voltage charging on the traction battery when the voltage of the battery cell reaches the preset voltage, gradually reducing the charging current, and stopping charging when the charging current is less than a preset current;
step S2: performing constant current discharging on the traction battery at a preset discharging current until a state of charge of the traction battery is 0, and resting the traction battery for a certain period of time after the state of charge is 0; and
step S3: repeatedly performing steps S1 and S2 for a preset number of cycles.

In a preferred implementation of the above apparatus, the maintenance strategy comprises:

when the change rate of the health degree of the traction battery is greater than the preset change rate threshold, the charging current is a first value, the discharging current is a second value, and the number of cycles is a first preset value in the maintenance strategy; and
when the change rate of the health degree of the traction battery is less than or equal to the preset change rate threshold and the health degree is the specific value, the charging current is a third value, the discharging current is a fourth value, and the number of cycles is a second preset value in the maintenance strategy,
wherein the first value is greater than the third value, the second value is greater than the fourth value, and the first preset value is less than the second preset value.

In a preferred implementation of the above apparatus, the acquisition unit is further configured to:

predict a travelling path and a trip time of a vehicle based on pre-acquired historical driving data of the vehicle;
the matching unit is further configured to acquire an available maintenance terminal of the traction battery based on the maintenance strategy, the travelling path, and the trip time; and
the generation unit is further configured to generate the maintenance scheme for the traction battery based on the maintenance strategy, the travelling path, the trip time, and the available maintenance terminal.

In a preferred implementation of the above apparatus, the acquisition unit is further configured to acquire an added value corresponding to the maintenance strategy; and
the generation unit is further configured to generate the maintenance scheme for the traction battery based on the maintenance strategy, the travelling path, the trip time, the available maintenance terminal, and the added value.
In a preferred implementation of the above apparatus, the generation unit comprises an update subunit, and the update subunit is configured to:
acquire an update instruction of the maintenance scheme, and regenerate a maintenance scheme for the traction battery based on a maintenance time and a maintenance terminal specified by the update instruction of the maintenance scheme.
In a preferred implementation of the above apparatus, the maintenance terminal is a battery swap station or a mobile battery swap station or a vehicle repair station.
A third aspect of the invention provides a server, which comprises the traction battery maintenance apparatus described above, and
further comprises:
a transceiver unit configured to receive battery state data and a maintenance feedback request from a user terminal, and send, to the user terminal when the maintenance feedback request is a confirmation instruction, a maintenance scheme generated by the traction battery maintenance apparatus.
The maintenance terminal comprises:

a communication unit configured to receive a maintenance scheme sent by a preset server according to the invention, and send maintenance data to the server; and
a maintenance unit configured to maintain a specified traction battery according to the maintenance scheme.

A fourth aspect of the invention provides a traction battery maintenance system, which comprises the server and the maintenance terminal that are described above.

In a preferred implementation of the above system, the traction battery maintenance system further comprises a user terminal configured to receive a maintenance scheme sent by the server, and send a maintenance confirmation instruction to the server, wherein

the server is further configured to send the maintenance scheme to the maintenance terminal according to the maintenance confirmation instruction.

In a preferred implementation of the above system, the user terminal is further configured to receive performance improvement information of the traction battery that is sent by the server based on the maintenance data.

In a preferred implementation of the above system, the user terminal is an automotive head unit or a mobile terminal.

A fifth aspect of the invention provides a storage apparatus in which a plurality of programs are stored, and the programs are adapted to be loaded by a processor to perform the above-mentioned traction battery maintenance method.

Compared with the closest prior art, the technical solutions of the invention have at least the following beneficial effects:

1. In the invention, a health degree of a traction battery can be actively acquired, a corresponding maintenance strategy is matched based on a maintenance strategy matching table, different health degrees of the traction battery are matched with different maintenance strategies, and a corresponding maintenance strategy is provided depending on an actual status of the traction battery, so that a user can be notified in time to maintain the traction battery when the battery of a vehicle needs to be maintained, thereby improving a service life of the traction battery. Among the different maintenance strategies, two are disclosed in the present invention.

2. In the invention, a maintenance scheme in line with a user's habits can be generated based on the user's habits. In addition, various forms of maintenance sites are provided, and the maintenance forms are flexible, thereby improving user experience.

**Brief Description of the Drawings**

FIG. 1 is a schematic diagram of main steps of a first traction battery maintenance method according to an embodiment of the invention;

FIG. 2 is a diagram of current changes in one-time maintenance of a traction battery according to an embodiment of the invention;

FIG. 3 is a diagram of current changes in cyclic maintenance of a traction battery according to an embodiment of the invention;

FIG. 4 is a schematic diagram of main steps of a second traction battery maintenance method according to an embodiment of the invention; and

FIG. 5 is a schematic diagram of a main structure of a traction battery maintenance apparatus according to an embodiment of the invention.

**Detailed Description of Embodiments**

To make the objectives, technical solutions, and advantages of the embodiments of the invention clearer, the technical solutions in the embodiments of the invention will be described clearly and completely in conjunction with the drawings in the embodiments of the invention. Obviously, the described embodiments are only some, rather than all of the embodiments of the invention. Based on the embodiments of the invention, all other embodiments obtained by those of ordinary skills in the art without going through any creative work shall fall within the protection scope of the invention.

Preferred implementations of the invention are described below with reference to the drawings. It should be understood by those skilled in the art that these implementations are only for explaining the technical principles of the invention and are not intended to limit the protection scope of the invention.

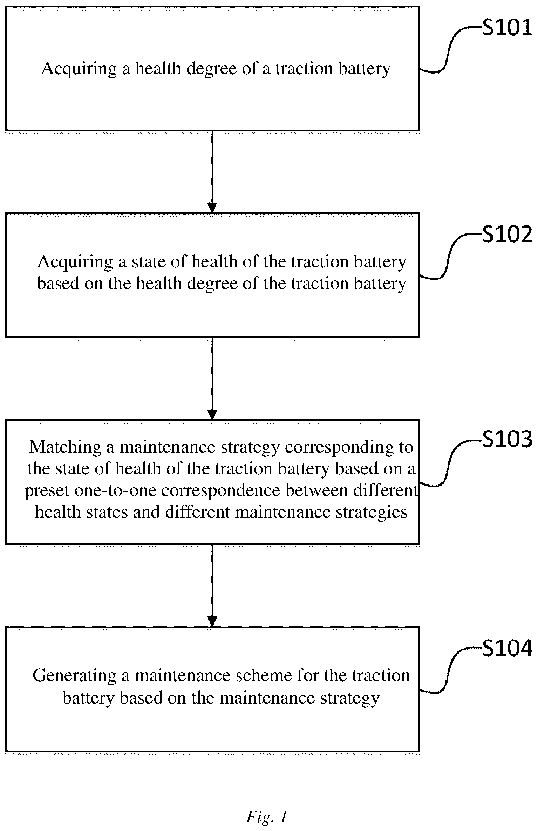

Referring to FIG. 1, FIG. 1 illustrates main steps of a first traction battery maintenance method in this embodiment. As shown in FIG. 1, the first traction battery maintenance method in this embodiment comprises the following steps: Step S 101: acquiring a health degree of a traction battery.

Specifically, the health degree of the traction battery is a comprehensive representation factor of battery health. During long-term use, the battery inevitably undergoes aging and deterioration. In order to reasonably assess the remaining use time of the battery, it is necessary to acquire the health degree of the traction battery. In this embodiment of the invention, the health degree of the traction battery can be a state of health (SOH) of the battery or other parameters that can represent the battery health, which is not limited in the invention. For convenience of description, the invention is described below by using an example in which the health degree of the battery is an SOH.

The state of health (SOH) of the battery is the comprehensive representation factor of the battery health. The SOH of the battery is a ratio of a capacity discharged by the traction battery from a fully charged state to a cut-off voltage at a certain rate to its corresponding nominal capacity under standard conditions. Generally, after a battery has been used for a period of time, a ratio of a measured actual value of a performance parameter to a nominal value thereof can be used directly or indirectly to determine a state of health of the battery and measure a health degree of the battery.

In this embodiment of the invention, the health degree of the traction battery may be acquired through a plurality of methods and a plurality of parameter values, so that a state of health of the traction battery can be monitored in real time. An example in which the health degree of the traction battery is an SOH is used, a value of the SOH can be calculated through methods such as a direct discharge method, an internal resistance method, an electrochemical impedance analysis method, and a model method, or can be calculated from the perspective of SOH definition. Calculation can be performed by using various parameters such as charging duration of the battery, changes in a voltage varying with the SOH, and a resistance value, wherein related parameters may be actively reported by a vehicle where the traction battery is located, or may be acquired by a maintenance terminal and uploaded to a backend server when the vehicle is charged at the maintenance terminal. Since content of SOH calculation has been disclosed in the prior art, a detailed description is not provided herein.

Step S 102: acquiring a state of health of the traction battery based on the health degree of the traction battery.

After the health degree of the traction battery is obtained, the state of health of the traction battery can be calculated based on a change rate of the health degree of the traction battery. Different states of health comprise: a state of the traction battery when the change rate of the health degree of the traction battery is greater than a preset change rate threshold, and a state of the traction battery when the change rate of the health degree of the traction battery is less than or equal to the preset change rate threshold and the health degree is a specific value, wherein the specific value comprises at least one numerical value.

Specifically, an example in which the health degree of the traction battery is an SOH is used for description. With the long use of the battery, the SOH of the battery rapidly degrades, for example, in cases where fast charging is performed on the battery for a long time, and the vehicle travels in bad road conditions for a long time. Existing batteries needs to be maintained after an SOH degrades to less than 80%, but when the SOH of the battery degrades to less than 80%, the maintenance requires more resources, and it will take a longer time to maintain the battery. For a maintenance terminal, a higher tolerance for efficiency is required.

In this embodiment of the invention, when the SOH of the battery degrades to 80%, a change rate of the SOH of the battery may be compared with a preset determination threshold. If the change rate of the SOH of the battery is greater than the preset determination threshold, it may be considered that the traction battery is in a first state of health, where the preset determination threshold may range from 0.01 to 0.15; if the SOH of the battery has not degraded to less than 80%, that is, the change rate of the SOH of the battery is within a normal change range of the SOH, when a value of the SOH value is a specific value, specifically, the SOH may range from 100% to 80%, a plurality of nodes may be set. For convenience of description, this embodiment of the invention is described by using an example in which the number of nodes is 5. When the SOH of the battery is [s1, s2, s3, s4, s5] and is the same as a value of any one of the nodes, where values of [s1, s2, s3, s4, s5] may be [95, 90, 88, 86, 84], it may be considered that the traction battery is in a second state of health.

A specific calculation method of the change rate of the SOH may be as shown in formula (1):

$$\mathrm{Mt} = \Delta SOH/\Delta t \qquad (1)$$

Mt represents a change rate of the SOH at a time t, $\Delta SOH$ represents a change value of the SOH at the time t relative to an initial time, and $\Delta t$ represents a change value of the time at the time t relative to the initial time.

Step S 103: matching a maintenance strategy corresponding to the state of health of the traction battery based on a one-to-one correspondence between different states of health and different maintenance strategies.

In this embodiment of the invention, there is a one-to-one correspondence between different states of health and different maintenance strategies, and the maintenance strategy corresponding to the state of health of the traction battery can be matched based on the state of health. The maintenance strategy of the traction battery comprises performing cyclic charging and discharging on the traction battery multiple times, wherein a charging current, a discharging current, and the number of cycles of the cyclic charging and discharging performed multiple times depend on the state of health of the traction battery.

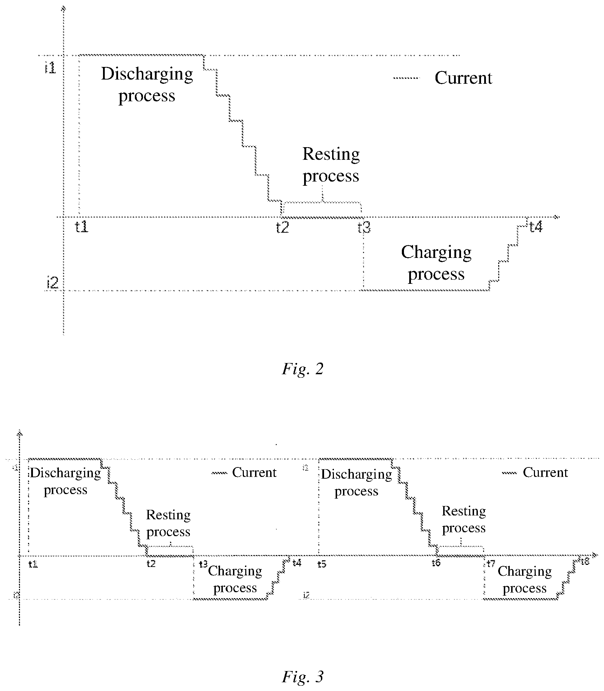

Referring to FIG. 2 and FIG. 3, FIG. 2 illustrates a current change process in single maintenance of a traction battery, and FIG. 3 illustrates a current change process in cyclic maintenance of a traction battery. As shown in FIG. 2, the time period t1-t2 represents a discharging process, the time period t2-t3 represents a resting process, and the time period t3-t4 represents a charging process. As shown in FIG. 3, t1-t4 represents a first cyclic charging and discharging process, and t5-t8 represents a second cyclic charging and discharging process.

Performing cyclic charging and discharging on the traction battery multiple times comprises the following steps: Charging step: performing constant current charging on the traction battery with a preset charging current when a voltage of a battery cell in the traction battery is less than a preset voltage, and performing constant voltage charging on the traction battery when the voltage of the battery cell reaches the preset voltage, gradually reducing the charging current, and stopping charging when the charging current is less than a preset current.

Discharging and resting step: performing constant current discharging on the traction battery with a preset discharging current until a state of charge of the traction battery is 0, and resting the traction battery for a certain period of time after the state of charge is 0.

Cycle steps: repeatedly performing the charging step and the discharging and resting step for a preset number of cycles.

It should be noted that the sequence of the charging step and the discharging and resting step is not limited in this embodiment of the invention. In practical application, a traction battery may be discharged first, and after the discharging ends, the traction battery is rested for a certain period of time, and then the traction battery is charged.

When the change rate of the health degree of the traction battery is greater than the preset change rate threshold, the charging current is a first value, the discharging current is a second value, and the number of cycles is a first preset value in the maintenance strategy; and

when the change rate of the health degree of the traction battery is less than or equal to the preset change rate threshold and the health degree is the specific value, the charging current is a third value, the discharging current is a fourth value, and the number of cycles is a second preset value in the maintenance strategy; wherein the first value is greater than the third value, the second value is greater than the fourth value, and the first preset value is less than the second preset value. For convenience of description, a detailed description of the preset values involved in cyclic charging and discharging performed multiple times is provided in the following content.

Maintenance strategy R1 corresponding to the first state of health of the traction battery:

in a discharging stage, constant current discharging is performed, the discharging current maintains at 1 C, and a state of charge (SOC) of the battery pack is changed from 100% to 0% through discharging; in a resting stage, the battery pack is rested for 10 min to 30 min after the discharging is completed; and in a charging stage, charging is divided into two steps: constant current charging and constant voltage charging, wherein when a voltage of a battery cell in the battery pack is less than Vm, constant current charging is performed on the battery pack and the charging current maintains between 0.01 C and 0.08 C; and when all voltages of cells in the battery pack reach Vm, constant voltage charging is performed on the battery pack, the charging current is gradually reduced, and the charging is stopped when the charging current is less than 0.01 C.

Discharging, resting, and charging of the battery pack may be considered as a maintenance cycle, and the maintenance strategy R1 needs to involve 3 to 5 cycles.

Maintenance strategy R2 corresponding to the second state of health of the traction battery:

in a discharging stage, constant current discharging is performed, the discharging current maintains at 1 C, and the SOC of the battery pack is changed from 100% to 0% through discharging; in a resting stage, the battery pack is rested for 10 min to 30 min after the discharging is completed; and in a charging stage, charging is divided into two steps: constant current charging and constant voltage charging, wherein when a voltage of a battery cell in the battery pack is less than Vm, constant current charging is performed on the battery pack and the charging current maintains between 0.09 C and 0.2 C; and when all voltages of cells in the battery pack reach Vm, constant voltage charging is performed on the battery pack, the charging current is gradually reduced, and the charging is stopped when the charging current is less than 0.05 C.

Discharging, resting, and charging of the battery pack may be considered as a maintenance cycle, and the maintenance strategy R2 needs to involve 1 to 3 cycles.

A value of Vm can be set depending on specific conditions of the battery, which is not limited herein.

In the maintenance strategy R1, the charging current corresponds to the first value, the discharging current corresponds to the second value, and the number of cycles corresponds to the first preset value. In the maintenance strategy R2, the charging current corresponds to the third value, the discharging current corresponds to the fourth value, and the number of cycles corresponds to the second preset value.

In addition, when a retention rate of a battery capacity is less than 80%, while the change rate of the SOH of the battery is less than the preset determination threshold, a general maintenance strategy may be used to reduce control parameters for the maintenance of the traction battery by the maintenance terminal, and improve the utilization of resources. The general maintenance strategy is specifically as follows:

in a discharging stage, constant current discharging is performed, the discharging current maintains at 1 C, and the SOC of the battery pack is changed from 100% to 0% through discharging;

in a resting stage, the battery pack is rested for 10 min to 30 min after the discharging is completed; and

in a charging stage, charging is divided into two steps: constant current charging and constant voltage charging, wherein when a voltage of a battery cell in the battery pack is less than Vm, constant current charging is performed on the battery pack and the charging current maintains between 0.01 C and 0.2 C; and when all voltages of cells in the battery pack reach Vm, constant voltage charging is performed on the battery pack, the charging current is gradually reduced, and the charging is stopped when the charging current is less than 0.05 C.

Discharging, resting, and charging of the battery pack may be considered as a maintenance cycle, and the general maintenance scheme needs to involve 1 to 5 cycles.

Step S104: generating a maintenance scheme for the traction battery based on the maintenance strategy.

Specifically, this step is described below in conjunction with three solutions:

First solution: the maintenance scheme for the traction battery is generated based on the maintenance strategy, a travelling path of the vehicle, a trip time, and a maintenance terminal.

During a travelling process of the vehicle, the vehicle uploads habit data of a user to a backend server, wherein the habit data of the user may be location data of the vehicle, use time data of the vehicle, etc., and a daily driving route and a trip time of the user is analysed based on the habit data of the user. After the state of health of the traction battery is obtained, the corresponding maintenance strategy is obtained with reference to a maintenance strategy matching table, a location of a maintenance terminal that is on the daily driving route of the user or close to the daily driving route of the user is provided in conjunction with the maintenance strategy, and maintenance of the traction battery is recommended to the user during free time of the user. The maintenance terminal may be a battery swap station or a mobile battery swap station or a vehicle repair station. According to vehicle usage habits of the user, the maintenance scheme is flexibly provided during a use process of the user, which is in line with the living habits of the user and improves user experience.

Second solution: the maintenance scheme for the traction battery is generated based on the maintenance strategy, the travelling path, the trip time, the maintenance terminal, and an added value.

After the state of health of the traction battery is obtained, the corresponding maintenance strategy is obtained with reference to the maintenance strategy matching table, and a corresponding added value is set based on time spent in maintenance and electric energy consumed in maintenance that are involved in the maintenance strategy. For example, the added value may be accumulated maintenance points, etc., and users can exchange accumulated maintenance points for a certain charging time or for goods, etc. The maintenance scheme for the traction battery is generated based on the maintenance strategy, the travelling path, the trip time, and the maintenance terminal in conjunction with the added value, so that enthusiasm of a user for traction battery maintenance can be motivated.

Third solution: a new maintenance scheme is regenerated according to an update instruction.

In this embodiment of the invention, an application can be installed in the vehicle or a mobile terminal (such as a mobile phone and a tablet computer) associated with the vehicle, and the backend server may generate the corresponding maintenance scheme based on the maintenance strategy, the travelling path, the trip time, the maintenance terminal, etc., and push the maintenance scheme to the user, but the user may want to modify the maintenance scheme due to their own actual situations. For example, an actual driving path of the user is far away from a location of the maintenance terminal provided in the maintenance scheme, or a trip time of the user conflicts with the maintenance time provided in the maintenance scheme. In this case, the user may select a location of a maintenance terminal or select a maintenance time as an update instruction, and send the update instruction to the backend server through the vehicle or the mobile terminal associated with the vehicle, and the backend server regenerates a maintenance scheme.

In practical application, the backend server can send the maintenance scheme to the application. After the user accepts the maintenance scheme in the application, the backend server can send the maintenance scheme to a maintenance terminal pushed by the backend server or selected by the user. The maintenance time reserves an appropriate time for the user according to an estimated maintenance time in the maintenance scheme, and maintains the battery based on the maintenance strategy. After the maintenance of the battery is completed, the backend server can send a maintenance result to the application, wherein the maintenance result may be a performance improvement index after the maintenance of the battery relative to before the maintenance of the battery.

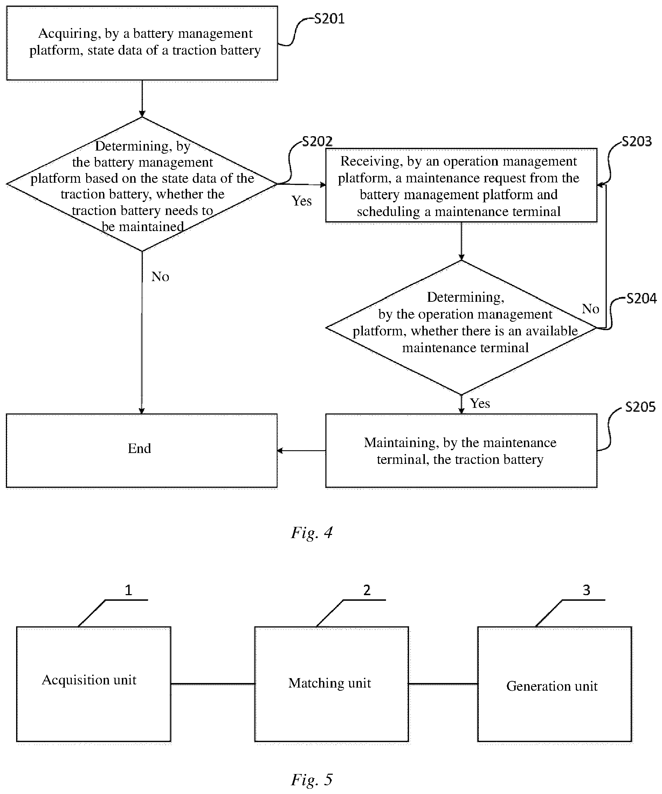

Referring to FIG. 4, FIG. 4 illustrates main steps of a second traction battery maintenance method in this embodiment. As shown in FIG. 4, the second traction battery maintenance method in this embodiment comprises the following steps:

Step S201: acquiring, by a battery management platform, state data of a traction battery.

In this embodiment of the invention, the state data of the traction battery may be state of health data of the traction battery, and the state of health data of the traction battery may be used to analyse a state of health of the traction battery. Specifically, the battery management platform may accurately locate, in conjunction with the state of health data of the traction battery and a state of health analysis method of the traction battery, a traction battery whose state of health of the traction battery rapidly decreases and whose state of health level is relatively low.

The state of health data of the traction battery may be an SOH, and a user terminal may be a vehicle head unit or a mobile terminal. The method for acquiring the state data of the traction battery by the battery management platform may be that a vehicle where the traction battery is located actively reports or a maintenance terminal acquires and reports the state data when the vehicle is charged at the maintenance terminal. The maintenance terminal may be a battery swap station or a mobile battery swap station or a vehicle repair station.

Step S202: determining, by the battery management platform based on the state data of the traction battery, whether the traction battery needs to be maintained.

After receiving the state data of the traction battery, the battery management platform can determine the state of health of the traction battery based on the state data of the traction battery. For a specific determination method, reference can be made to related content in the embodiment of the first traction battery maintenance method described above, and details are not described here again. The battery management platform may be a backend server, which is configured to receive the state data and a maintenance request of the traction battery, and determines whether the traction battery needs to be maintained. If the traction battery needs to be maintained, the battery management platform sends a maintenance request to an operation management platform and step S203 is performed. If there is no need to maintain the traction battery, the traction battery is not maintained.

Step S203: receiving, by the operation management platform, the maintenance request from the battery management platform and scheduling a maintenance terminal.

The operation management platform may be a backend server. After receiving the maintenance request from the battery management platform, the operation management platform may schedule a maintenance terminal connected to the operation management platform. When a plurality of traction batteries need to be maintained, the operation management platform can schedule maintenance terminals based on state of health levels of the traction batteries, priorities of maintenance requests, or user levels. The method of scheduling a maintenance terminal may be as follows: making a reservation for a use time of the maintenance terminal and sending a maintenance strategy corresponding to a state of health of a battery to the maintenance terminal, according to a maintenance request. For the specific scheduling method, reference can be made to related content in the embodiment of the first traction battery maintenance method described above, and details are not described here again.

Step S204: determining, by the operation management platform, whether there is an available maintenance terminal.

First, the operation management platform determines whether there is an available maintenance terminal, that is, whether there is an unused maintenance terminal, or a maintenance terminal being used and an estimated use time, so that the maintenance terminal can be used for scheduling in time after maintenance of a traction battery is completed. If there is no available maintenance terminal, return to step S203 until an available maintenance terminal is found.

Then, a priority of a maintenance request is used as an example. When there are available maintenance terminals, the operation management platform can sequentially arrange related maintenance terminals to maintain traction batteries based on priorities of received maintenance requests, and a traction battery that sends a maintenance request first is preferentially maintained. A user level is used as an example. When there are available maintenance terminals, the operation management platform can sequentially arrange related maintenance terminals to maintain traction batteries based on user levels, and a traction battery with a higher user level is preferentially maintained.

In addition, it is also possible to arrange related maintenance terminals to maintain traction batteries based on user habits. For specific content, reference can be made to related content in the embodiment of the first traction battery maintenance method described above, and details are not described here again.

Step S205: maintaining, by the maintenance terminal, the traction battery.

An example in which the maintenance terminal is a battery swap station is used. With the help of a deployed battery swap network, a bidirectional charging and discharging module can be introduced into a charging slot of the battery swap station, and performance maintenance of the traction battery is implemented by performing cyclic charging and discharging on the traction battery under a corresponding procedure. In addition, for a specific maintenance method of the traction battery, reference can be made to related content in the embodiment of the first traction battery maintenance method described above, and details are not described here again.

Based on the embodiment of the first traction battery maintenance method described above, the invention further provides a traction battery maintenance apparatus. The traction battery maintenance apparatus is described below in conjunction with the drawings.

Referring to FIG. 5, FIG. 5 illustrates a main structure of a traction battery maintenance apparatus in this embodiment. As shown in FIG. 5, the traction battery maintenance apparatus in this embodiment comprises an acquisition unit 1, a matching unit 2, and a generation unit 3.

The acquisition unit 1 is configured to acquire a state of health of a traction battery.

The matching unit 2 is configured to match a maintenance strategy corresponding to the state of health based on a preset one-to-one correspondence between different states of health and different maintenance strategies.

The generation unit 3 is configured to generate a maintenance scheme for the traction battery based on the maintenance strategy.

In a preferred implementation in this embodiment, the acquisition unit is further configured to:

acquire the state of health of the traction battery based on a change rate of a health degree of the traction battery; and the different states of health degree comprise:

a state of the traction battery when the change rate of the health degree of the traction battery is greater than a preset change rate threshold;

and a state of the traction battery when the change rate of the health degree of the traction battery is less than or equal to the preset change rate threshold and the health degree is a specific value, wherein the specific value comprises at least one numerical value.

In a preferred implementation in this embodiment, the maintenance strategy comprises performing cyclic charging and discharging on the traction battery multiple times;

wherein a charging current, a discharging current, and the number of cycles of the cyclic charging and discharging performed multiple times depend on the state of health of the traction battery.

In a preferred implementation in this embodiment, the maintenance strategy further comprises:

Step S1: performing constant current charging on the traction battery with a preset charging current when a voltage of a battery cell in the traction battery is less than a preset voltage, and performing constant voltage charging on the traction battery when the voltage of the battery cell reaches the preset voltage, gradually reducing the charging current, and stopping charging when the charging current is less than a preset current.

Step S2: performing constant current discharging on the traction battery with a preset discharging current until a state of charge of the traction battery is 0, and resting the traction battery for a certain period of time after the state of charge is 0.

Step S3: repeatedly performing steps S1 and S2 for a preset number of cycles.

In a preferred implementation in this embodiment, the maintenance strategy comprises:

when the change rate of the health degree of the traction battery is greater than the preset change rate threshold, the charging current is a first value, the discharging current is a second value, and the number of cycles is a first preset value in the maintenance strategy; and

when the change rate of the health degree of the traction battery is less than or equal to the preset change rate threshold and the health degree is the specific value, the charging current is a third value, the discharging current is a fourth value, and the number of cycles is a second preset value in the maintenance strategy;

wherein the first value is greater than the third value, the second value is greater than the fourth value, and the first preset value is less than the second preset value.

In a preferred implementation in this embodiment, the acquisition unit 1 is further configured to:

predict a travelling path and a trip time of a vehicle based on pre-acquired historical driving data of the vehicle;

the matching unit is further configured to acquire an available maintenance terminal of the traction battery based on the maintenance strategy, the travelling path, and the trip time; and

the generation unit 3 is further configured to generate the maintenance scheme for the traction battery based on the maintenance strategy, the travelling path, the trip time, and the available maintenance terminal.

In a preferred implementation in this embodiment, the acquisition unit 1 is further configured to acquire an added value corresponding to the maintenance strategy; and

the generation unit 3 is further configured to generate the maintenance scheme for the traction battery based on the maintenance strategy, the travelling path, the trip time, the available maintenance terminal and the added value.

In a preferred implementation in this embodiment, the generation unit 3 comprises an update subunit, and the update subunit is configured to:

acquire an update instruction of the maintenance scheme, and regenerate a maintenance scheme for the traction battery based on a maintenance time and a maintenance terminal specified by the update instruction of the maintenance scheme.

In a preferred implementation in this embodiment, the maintenance terminal is a battery swap station or a mobile battery swap station or a vehicle repair station.

Based on the embodiment of the traction battery maintenance method described above, the invention further provides a server, and the server comprises the traction battery maintenance apparatus described above.

The server further comprises a transceiver unit, which is configured to receive battery state data and a maintenance feedback request from a user terminal, and send, to the user terminal when the maintenance feedback request is a confirmation instruction, a maintenance scheme generated by the traction battery maintenance apparatus.

Based on the embodiment of the traction battery maintenance method described above, the maintenance terminal comprises:

a communication unit configured to receive a maintenance scheme sent by a preset server, and send maintenance data to the server; and
a maintenance unit configured to maintain a specified traction battery according to the maintenance scheme.

Based on the embodiment of the traction battery maintenance method described above, the invention further provides a traction battery maintenance system, which comprises the server and the maintenance terminal that are described above.

In a preferred implementation in this embodiment, the traction battery maintenance system further comprises a user terminal, which is configured to receive a maintenance scheme sent by the server, and send a maintenance confirmation instruction to the server, wherein
the server is further configured to send the maintenance scheme to the maintenance terminal according to the maintenance confirmation instruction.

In a preferred implementation in this embodiment, the user terminal is further configured to receive performance improvement information of the traction battery that is sent by the server based on maintenance data.

In a preferred implementation in this embodiment, the user terminal is a vehicle head unit or a mobile terminal.

Based on the embodiment of the traction battery maintenance method described above, the invention further provides a storage device in which a plurality of programs are stored, and the programs are adapted to be loaded by a processor to perform the traction battery maintenance method in the above method embodiment.

It will be clearly understood by those skilled in the art that for convenience and brevity of the description, for the specific working process and related description of the traction battery maintenance apparatus, the traction battery maintenance system, the server, the maintenance terminal, the storage apparatus, and the processing apparatus in the embodiments of the invention, reference can be made to the corresponding process of the traction battery maintenance method in the above-mentioned embodiment, which have the same beneficial effects as the above method, and details are not described here again.

The method or algorithm steps described in conjunction with the embodiments disclosed herein may be implemented by hardware, a software module executed by a processor, or a combination of both. The software module may be arranged in a random access memory (RAM), a memory, a read-only memory (ROM), an electrically programmable ROM, an electrically erasable programmable ROM, a register, a hard disk, a removable disk, a CD-ROM, or any other form of storage medium known in the technical field.

Those skilled in the art should be able to realize that the method steps of the various examples described in conjunction with the embodiments disclosed herein can be implemented in electronic hardware, computer software or a combination of both. To clearly illustrate the interchangeability of electronic hardware and software, the compositions and steps of the various examples have been generally described in terms of functionality in the above description. Whether these functions are performed in electronic hardware or software depends on the specific application and design constraints of the technical solution. Those skilled in the art can use different methods to implement the described functions for each particular application, but such implementation should not be considered to be beyond the scope of the invention, as defined by the independent claims.

It should be noted that, the terms "first", "second", and the like in the specification, claims, and drawings of the invention are intended to distinguish between similar objects, and are not intended to describe or indicate a particular order or sequence. It should be understood that the data termed in such a way are interchangeable in proper circumstances so that the embodiments of the invention described herein can be implemented in other orders than the order illustrated or described herein.

Heretofore, the technical solutions of the invention have been described in conjunction with the preferred implementations shown in the drawings; however, those skilled in the art can readily understand that the protection scope of the invention is obviously not limited to these specific implementations. Without departing from the principle of the invention, as defined by the independent claims, a person skilled in the art may make equivalent modifications or substitutions to related technical features, and the technical solutions after these modifications or substitutions shall fall within the protection scope of the invention.

**Claims**

1. A traction battery maintenance method, **characterized by** comprising:

   acquiring (S102) a state of health of a traction battery;
   matching (S103) a maintenance strategy corresponding to the state of health based on a preset one-to-one correspondence between different states of health and different maintenance strategies; and
   generating (S104) a maintenance scheme for the traction battery based on the maintenance strategy,
   wherein the step of "acquiring a state of health of a traction battery" comprises:

   acquiring the state of health of the traction battery based on a change rate of a health degree of the traction battery; and
   the different states of health comprise: the state of the traction battery when the change rate of the health degree of the traction battery is greater than a preset change rate threshold, and the state of the traction battery when the change rate of the health degree of the traction battery is less than or equal to the preset change rate threshold and the health degree is a specific value, wherein the specific value comprises at least one value,
   **characterized in that** the maintenance strategy comprises performing cyclic charging and discharging on the traction battery multiple times,
   wherein a charging current, a discharging current, and the number of cycles of the cyclic charging and discharging performed multiple times depend on the state of health of the traction battery.

2. The traction battery maintenance method according to claim 1, **characterized in that** the step of "performing cyclic charging and discharging on the traction battery multiple times" comprises:

   step S1: performing constant current charging on the traction battery at a preset charging current when a voltage of a battery cell in the traction battery is less than a preset voltage, and performing constant voltage charging on the traction battery when the voltage of the battery cell reaches the preset voltage, gradually reducing the charging current, and stopping charging when the charging current is less than a preset current;
   step S2: performing constant current discharging on the traction battery at a preset discharging current until a state of charge of the traction battery is 0, and resting the traction battery for a certain period of time after the state of charge is 0; and
   step S3: repeatedly performing steps S1 and S2 for a preset number of cycles.

3. The traction battery maintenance method according to any one of claims 1 or 2, **characterized in that** the maintenance strategy comprises: when the change rate of the health degree of the traction battery is greater than the preset change rate threshold, the charging current is a first value, the discharging current is a second value, and the number of cycles is a first preset value in the maintenance strategy; and

   when the change rate of the health degree of the traction battery is less than or equal to the preset change rate threshold and the health degree is the specific value, the charging current is a third value, the discharging current is a fourth value, and the number of cycles is a second preset value in the maintenance strategy,
   wherein the first value is greater than the third value, the second value is greater than the fourth value, and the first preset value is less than the second preset value.

4. A traction battery maintenance apparatus, **characterized by** comprising:

   an acquisition unit (1) configured to acquire a state of health of a traction battery;
   a matching unit (2) configured to match a maintenance strategy corresponding to the state of health based on a preset one-to-one correspondence between different states of health and different maintenance strategies; and
   a generation unit (3) configured to generate a maintenance scheme for the traction battery based on the maintenance strategy,
   wherein the acquisition unit (1) is further configured to:

acquire the state of health of the traction battery based on a change rate of a health degree of the traction battery; and
the different states of health degree comprise:

the state of the traction battery when the change rate of the health degree of the traction battery is greater than a preset change rate threshold;
and the state of the traction battery when the change rate of the health degree of the traction battery is less than or equal to the preset change rate threshold and the health degree is a specific value, wherein the specific value comprises at least one value,
**characterized in that** the maintenance strategy comprises performing cyclic charging and discharging on the traction battery multiple times,
wherein a charging current, a discharging current, and the number of cycles of the cyclic charging and discharging performed multiple times depend on the state of health of the traction battery.

5. The traction battery maintenance apparatus according to claim 4, **characterized in that** the maintenance strategy further comprises:

step S1: performing constant current charging on the traction battery at a preset charging current when a voltage of a battery cell in the traction battery is less than a preset voltage, and performing constant voltage charging on the traction battery when the voltage of the battery cell reaches the preset voltage, gradually reducing the charging current, and stopping charging when the charging current is less than a preset current;
step S2: performing constant current discharging on the traction battery at a preset discharging current until a state of charge of the traction battery is 0, and resting the traction battery for a certain period of time after the state of charge is 0; and
step S3: repeatedly performing steps S1 and S2 for a preset number of cycles.

6. The apparatus according to claim 4, **characterized in that** the maintenance strategy comprises:

when the change rate of the health degree of the traction battery is greater than the preset change rate threshold, the charging current is a first value, the discharging current is a second value, and the number of cycles is a first preset value in the maintenance strategy; and
when the change rate of the health degree of the traction battery is less than or equal to the preset change rate threshold and the health degree is the specific value, the charging current is a third value, the discharging current is a fourth value, and the number of cycles is a second preset value in the maintenance strategy,
wherein the first value is greater than the third value, the second value is greater than the fourth value, and the first preset value is less than the second preset value.

7. A server, **characterized by** comprising a traction battery maintenance apparatus according to any one of claims 4 to 6; and
further comprising:
a transceiver unit configured to receive battery state data and a maintenance feedback request from a user terminal, and send, to the user terminal, a maintenance scheme generated by the traction battery maintenance apparatus when the maintenance feedback request is a confirmation instruction.

8. A traction battery maintenance system, **characterized by** comprising a server according to claim 7 and a maintenance terminal comprising a communication unit configured to receive a maintenance scheme sent by the and send maintenance data to the server; and a maintenance unit configured to maintain a specified traction battery according to the maintenance scheme.

9. A storage apparatus in which a plurality of programs are stored, **characterized in that** the programs are adapted to be loaded by a processor to perform a traction battery maintenance method according to any one of claims 1 to 3.

**Patentansprüche**

1. Traktionsbatteriewartungsverfahren, **gekennzeichnet durch** Erfassen (S102) eines Gesundheitszustands einer Traktionsbatterie;

Anpassen (S103) einer Wartungsstrategie, die dem Gesundheitszustand entspricht, auf der Grundlage einer voreingestellten eineindeutigen Entsprechung zwischen verschiedenen Gesundheitszuständen und verschiedenen Wartungsstrategien und

Erzeugen (S104) eines Wartungsschemas für die Traktionsbatterie auf der Grundlage der Wartungsstrategie, wobei der Schritt des "Erfassens eines Gesundheitszustands einer Traktionsbatterie" Folgendes umfasst:

Erfassen des Gesundheitszustands der Traktionsbatterie auf der Grundlage einer Änderungsrate eines Gesundheitsmaßes der Traktionsbatterie; und

die verschiedenen Gesundheitszustände Folgendes umfassen: den Zustand der Traktionsbatterie, wenn die Änderungsrate des Gesundheitsmaßes der Traktionsbatterie größer als ein voreingestellter Änderungsratenschwellenwert ist, und den Zustand der Traktionsbatterie, wenn die Änderungsrate des Gesundheitsmaßes der Traktionsbatterie kleiner oder gleich dem voreingestellten Änderungsratenschwellenwert ist und der Gesundheitsgrad ein spezifischer Wert ist, wobei der spezifische Wert mindestens einen Wert umfasst, **dadurch gekennzeichnet, dass** die Wartungsstrategie ein mehrfaches Durchführen eines zyklischen Ladens und Entladens an der Traktionsbatterie umfasst,

wobei ein Ladestrom, ein Entladestrom und die Anzahl von Zyklen des zyklischen Ladens und Entladens, das mehrfach durchgeführt wird, vom Gesundheitszustand der Traktionsbatterie abhängen.

2. Traktionsbatteriewartungsverfahren nach Anspruch 1, **dadurch gekennzeichnet, dass** der Schritt des "mehrfachen Durchführens eines zyklischen Ladens und Entladens an der Traktionsbatterie" Folgendes umfasst:

Schritt S1: Durchführen eines Konstantstromladens an der Traktionsbatterie bei einem voreingestellten Ladestrom, wenn eine Spannung einer Batteriezelle in der Traktionsbatterie kleiner als eine voreingestellte Spannung ist, und Durchführen eines Konstantspannungsladens an der Traktionsbatterie, wenn die Spannung der Batteriezelle die voreingestellte Spannung erreicht, allmähliches Verringern des Ladestroms und Stoppen des Ladens, wenn der Ladestrom kleiner als ein voreingestellter Strom ist;

Schritt S2: Durchführen eines Konstantstromentladens an der Traktionsbatterie bei einem voreingestellten Entladestrom, bis ein Ladezustand der Traktionsbatterie 0 ist, und Versetzen der Traktionsbatterie in einen Ruhezustand für einen bestimmten Zeitraum, nachdem der Ladezustand 0 ist; und

Schritt S3: wiederholtes Durchführen der Schritte S1 und S2 für eine voreingestellte Anzahl von Zyklen.

3. Traktionsbatteriewartungsverfahren nach einem der Ansprüche 1 oder 2, **dadurch gekennzeichnet, dass** die Wartungsstrategie Folgendes umfasst: wenn die Änderungsrate des Gesundheitsmaßes der Traktionsbatterie größer als der voreingestellte Änderungsratenschwellenwert ist, ist der Ladestrom ein erster Wert, ist der Entladestrom ein zweiter Wert und ist die Anzahl von Zyklen ein erster voreingestellter Wert in der Wartungsstrategie; und

wenn die Änderungsrate des Gesundheitsmaßes der Traktionsbatterie kleiner oder gleich dem voreingestellten Änderungsratenschwellenwert ist und der Gesundheitsgrad der spezifische Wert ist, ist der Ladestrom ein dritter Wert, ist der Entladestrom ein vierter Wert und ist die Anzahl von Zyklen ein zweiter voreingestellter Wert in der Wartungsstrategie,

wobei der erste Wert größer als der dritte Wert ist, der zweite Wert größer als der vierte Wert ist und der erste voreingestellte Wert kleiner als der zweite voreingestellte Wert ist.

4. Traktionsbatteriewartungsvorrichtung, **gekennzeichnet durch** eine Erfassungseinheit (1), die konfiguriert ist, einen Gesundheitszustand einer Traktionsbatterie zu erfassen;

eine Anpassungseinheit (2), die konfiguriert ist, eine Wartungsstrategie, die dem Gesundheitszustand entspricht, auf der Grundlage einer voreingestellten eineindeutigen Entsprechung zwischen verschiedenen Gesundheitszuständen und verschiedenen Wartungsstrategien anzupassen; und

eine Erzeugungseinheit (3), die konfiguriert ist, ein Wartungsschema für die Traktionsbatterie auf der Grundlage der Wartungsstrategie zu erzeugen,

wobei die Erfassungseinheit (1) ferner konfiguriert ist zum:

Erfassen des Gesundheitszustands der Traktionsbatterie auf der Grundlage einer Änderungsrate eines Gesundheitsmaßes der Traktionsbatterie; und

die verschiedenen Gesundheitsmaßzustände Folgendes umfassen:

den Zustand der Traktionsbatterie, wenn die Änderungsrate des Gesundheitsmaßes der Traktionsbatterie größer als ein voreingestellter Änderungsratenschwellenwert ist; und

den Zustand der Traktionsbatterie, wenn die Änderungsrate des Gesundheitsmaßes der Traktionsbatterie kleiner oder gleich dem voreingestellten Änderungsratenschwellenwert ist und der Gesundheitsgrad ein spezifischer Wert ist, wobei der spezifische Wert mindestens einen Wert umfasst, **dadurch gekennzeichnet, dass** die Wartungsstrategie ein mehrfaches Durchführen eines zyklischen Ladens und Entladens an der Traktionsbatterie umfasst,

wobei ein Ladestrom, ein Entladestrom und die Anzahl von Zyklen des zyklischen Ladens und Entladens, das mehrfach durchgeführt wird, vom Gesundheitszustand der Traktionsbatterie abhängen.

5. Traktionsbatteriewartungsvorrichtung nach Anspruch 4, **dadurch gekennzeichnet, dass** die Wartungsstrategie ferner Folgendes umfasst:

Schritt S1: Durchführen eines Konstantstromladens an der Traktionsbatterie bei einem voreingestellten Ladestrom, wenn eine Spannung einer Batteriezelle in der Traktionsbatterie kleiner als eine voreingestellte Spannung ist, und Durchführen eines Konstantspannungsladens an der Traktionsbatterie, wenn die Spannung der Batteriezelle die voreingestellte Spannung erreicht, allmähliches Verringern des Ladestroms und Stoppen des Ladens, wenn der Ladestrom kleiner als ein voreingestellter Strom ist;

Schritt S2: Durchführen eines Konstantstromentladens an der Traktionsbatterie bei einem voreingestellten Entladestrom, bis ein Ladezustand der Traktionsbatterie 0 ist, und Versetzen der Traktionsbatterie in einen Ruhezustand für einen bestimmten Zeitraum, nachdem der Ladezustand 0 ist; und

Schritt S3: wiederholtes Durchführen der Schritte S1 und S2 für eine voreingestellte Anzahl von Zyklen.

6. Vorrichtung nach Anspruch 4, **dadurch gekennzeichnet, dass** die Wartungsstrategie Folgendes umfasst:

wenn die Änderungsrate des Gesundheitsmaßes der Traktionsbatterie größer als der voreingestellte Änderungsratenschwellenwert ist, hat der Ladestrom einen ersten Wert, hat der Entladestrom einen zweiten Wert und ist die Anzahl von Zyklen ein erster voreingestellter Wert in der Wartungsstrategie; und

wenn die Änderungsrate des Gesundheitsmaßes der Traktionsbatterie kleiner oder gleich dem voreingestellten Änderungsratenschwellenwert ist und der Gesundheitsgrad der spezifische Wert ist, hat der Ladestrom einen dritten Wert, hat der Entladestrom einen vierten Wert und ist die Anzahl von Zyklen ein zweiter voreingestellter Wert in der Wartungsstrategie,

wobei der erste Wert größer als der dritte Wert ist, der zweite Wert größer als der vierte Wert ist und der erste voreingestellte Wert kleiner als der zweite voreingestellte Wert ist.

7. Server, **gekennzeichnet durch** eine Traktionsbatteriewartungsvorrichtung nach einem der Ansprüche 4 bis 6, ferner **gekennzeichnet durch** eine Sende-/Empfangseinheit, die konfiguriert ist, Batteriezustandsdaten und eine Wartungsrückkopplungsanforderung von einem Anwenderendgerät zu empfangen und ein Wartungsschema zum Anwenderendgerät zu senden, das durch die Traktionsbatteriewartungsvorrichtung erzeugt wird, wenn die Wartungsrückkopplungsanforderung ein Bestätigungsbefehl ist.

8. Traktionsbatteriewartungssystem, **gekennzeichnet durch** einen Server nach Anspruch 7 und ein Wartungsendgerät, das eine Kommunikationseinheit umfasst, die konfiguriert ist, ein Wartungsschema, das durch den gesendet wurde, zu empfangen und Wartungsdaten zum Server zu senden; und eine Wartungseinheit, die konfiguriert ist, eine festgelegte Traktionsbatterie gemäß dem Wartungsschema zu warten.

9. Speichervorrichtung, in der mehrere Programme gespeichert sind, **dadurch gekennzeichnet, dass** die Programme ausgelegt sind, durch einen Prozessor geladen zu werden, um ein Traktionsbatteriewartungsverfahren nach einem der Ansprüche 1 bis 3 durchzuführen.

**Revendications**

1. Procédé d'entretien de batterie de traction, **caractérisé en ce qu'**il comprend :

l'acquisition (S102) d'un état de santé d'une batterie de traction ;

l'appariement (S103) d'une stratégie d'entretien correspondant à l'état de santé sur la base d'une correspondance biunivoque prédéfinie entre différents états de santé et différentes stratégies d'entretien ; et

la génération (S104) d'un plan d'entretien pour la batterie de traction sur la base de la stratégie d'entretien,

l'étape d'« acquisition d'un état de santé d'une batterie de traction » comprenant :

l'acquisition de l'état de santé de la batterie de traction sur la base d'un taux de changement d'un degré de santé de la batterie de traction ; et

les différents états de santé comprennent : l'état de la batterie de traction lorsque le taux de changement du degré de santé de la batterie de traction est supérieur à un seuil de taux de changement prédéfini, et l'état de la batterie de traction lorsque le taux de changement du degré de santé de la batterie de traction est inférieur ou égal au seuil de taux de changement prédéfini et que le degré de santé est une valeur spécifique, la valeur spécifique comprenant au moins une valeur,

**caractérisé en ce que** la stratégie d'entretien comprend la réalisation de charges et de décharges cycliques sur la batterie de traction de multiples fois,

dans lequel un courant de charge, un courant de décharge, et le nombre de cycles de la charge et de la décharge cycliques réalisés de multiples fois dépendent de l'état de santé de la batterie de traction.

2. Procédé d'entretien de batterie de traction selon la revendication 1, **caractérisé en ce que** l'étape de « réalisation de charges et de décharges cycliques sur la batterie de traction de multiples fois » comprend :

étape S1 : la réalisation d'une charge à courant constant sur la batterie de traction à un courant de charge prédéfini lorsqu'une tension d'un élément de batterie dans la batterie de traction est inférieure à une tension prédéfinie, et la réalisation d'une charge à tension constante sur la batterie de traction lorsque la tension de l'élément de batterie atteint la tension prédéfinie, la réduction progressive du courant de charge, et l'arrêt de la charge lorsque le courant de charge est inférieur à un courant prédéfini ;

étape S2 : la réalisation d'une décharge à courant constant sur la batterie de traction à un courant de décharge prédéfini jusqu'à ce qu'un état de charge de la batterie de traction soit de 0, et la mise au repos de la batterie de traction pendant une certaine période de temps après que l'état de charge est de 0 ; et

étape 3 : la réalisation répétée des étapes S1 et S2 pendant un nombre prédéfini de cycles.

3. Procédé d'entretien de batterie de traction selon l'une quelconque des revendications 1 ou 2, **caractérisé en ce que** la stratégie d'entretien comprend :

lorsque le taux de changement du degré de santé de la batterie de traction est supérieur au seuil de taux de changement prédéfini, le courant de charge est une première valeur, le courant de décharge est une deuxième valeur, et le nombre de cycles est une première valeur prédéfinie dans la stratégie d'entretien ; et

lorsque le taux de changement du degré de santé de la batterie de traction est inférieur ou égal au seuil de taux de changement prédéfini et que le degré de santé est la valeur spécifique, le courant de charge est une troisième valeur, le courant de décharge est une quatrième valeur, et le nombre de cycles est une deuxième valeur prédéfinie dans la stratégie d'entretien,

la première valeur étant supérieure à la troisième valeur, la deuxième valeur étant supérieure à la quatrième valeur, et la première valeur prédéfinie étant inférieure à la deuxième valeur prédéfinie.

4. Appareil de maintenance de batterie de traction, **caractérisé en ce qu'**il comprend :

une unité d'acquisition (1) configurée pour acquérir un état de santé d'une batterie de traction ;

une unité d'appariement (2) configurée pour apparier une stratégie d'entretien correspondant à l'état de santé sur la base d'une correspondance biunivoque prédéfinie entre différents états de santé et différentes stratégies d'entretien ; et

une unité de génération (3) configurée pour générer un plan d'entretien de la batterie de traction en fonction de la stratégie d'entretien,

l'unité d'acquisition (1) étant en outre configurée pour :

acquérir l'état de santé de la batterie de traction sur la base d'un taux de changement d'un degré de santé de la batterie de traction ; et

les différents états de degré de santé comprennent :

l'état de la batterie de traction lorsque le taux de changement du degré de santé de la batterie de traction est supérieur à un seuil de taux de changement prédéfini ;

et l'état de la batterie de traction lorsque le taux de changement du degré de santé de la batterie de traction est inférieur ou égal au seuil de taux de changement prédéfini et que le degré de santé est une valeur spécifique, la valeur spécifique comprenant au moins une valeur,
**caractérisé en ce que** la stratégie d'entretien comprend la réalisation de charges et de décharges cycliques sur la batterie de traction de multiples fois,
dans lequel un courant de charge, un courant de décharge, et le nombre de cycles de la charge et de la décharge cycliques réalisés de multiples fois dépendent de l'état de santé de la batterie de traction.

5. Appareil d'entretien de batterie de traction selon la revendication 4, **caractérisé en ce que** la stratégie d'entretien comprend en outre :

étape S1 : la réalisation d'une charge à courant constant sur la batterie de traction à un courant de charge prédéfini lorsqu'une tension d'un élément de batterie dans la batterie de traction est inférieure à une tension prédéfinie, et la réalisation d'une charge à tension constante sur la batterie de traction lorsque la tension de l'élément de batterie atteint la tension prédéfinie, la réduction progressive du courant de charge, et l'arrêt de la charge lorsque le courant de charge est inférieur à un courant prédéfini ;
étape S2 : la réalisation d'une décharge à courant constant sur la batterie de traction à un courant de décharge prédéfini jusqu'à ce qu'un état de charge de la batterie de traction soit de 0, et la mise au repos de la batterie de traction pendant une certaine période de temps après que l'état de charge est de 0 ; et
étape 3 : la réalisation répétée des étapes S1 et S2 pendant un nombre prédéfini de cycles.

6. Appareil selon la revendication 4, **caractérisé en ce que** la stratégie d'entretien comprend :

lorsque le taux de changement du degré de santé de la batterie de traction est supérieur au seuil de taux de changement prédéfini, le courant de charge est une première valeur, le courant de décharge est une deuxième valeur, et le nombre de cycles est une première valeur prédéfinie dans la stratégie d'entretien ; et
lorsque le taux de changement du degré de santé de la batterie de traction est inférieur ou égal au seuil de taux de changement prédéfini et que le degré de santé est la valeur spécifique, le courant de charge est une troisième valeur, le courant de décharge est une quatrième valeur, et le nombre de cycles est une deuxième valeur prédéfinie dans la stratégie d'entretien,
la première valeur étant supérieure à la troisième valeur, la deuxième valeur étant supérieure à la quatrième valeur, et la première valeur prédéfinie étant inférieure à la deuxième valeur prédéfinie.

7. Serveur, **caractérisé en ce qu'**il comprend un appareil d'entretien de batterie de traction selon l'une quelconque des revendications 4 à 6 ; et
comprenant en outre :
une unité d'émetteur-récepteur configurée pour recevoir des données d'état de batterie et une demande d'informations en retour d'entretien en provenance d'un terminal utilisateur, et envoyer, au terminal utilisateur, un plan d'entretien généré par l'appareil d'entretien de batterie de traction lorsque la demande d'informations en retour d'entretien est une instruction de confirmation.

8. Système d'entretien de batterie de traction, **caractérisé en ce qu'**il comprend un serveur selon la revendication 7 et un terminal d'entretien comprenant une unité de communication configurée pour recevoir un plan d'entretien envoyé par le et envoyer des données au serveur ; et une unité d'entretien configurée pour entretenir une batterie de traction spécifiée selon le plan d'entretien.

9. Appareil de stockage dans lequel une pluralité de programmes sont stockés, **caractérisé en ce que** les programmes sont conçus pour être chargés par un processeur afin de réaliser un procédé d'entretien de batterie de traction selon l'une quelconque des revendications 1 à 3.

S101
Acquiring a health degree of a traction battery

S102
Acquiring a state of health of the traction battery based on the health degree of the traction battery

S103
Matching a maintenance strategy corresponding to the state of health of the traction battery based on a preset one-to-one correspondence between different health states and different maintenance strategies

S104
Generating a maintenance scheme for the traction battery based on the maintenance strategy

*Fig. 1*

Fig. 2

Fig. 3

Acquiring, by a battery management
platform, state data of a traction battery —S201

Determining, by
the battery management
platform based on the state data of the
traction battery, whether the
traction battery needs to
be maintained —S202

Yes

Receiving, by an operation management
platform, a maintenance request from the
battery management platform and
scheduling a maintenance terminal —S203

No

Determining,
by the operation management
platform, whether there is an available
maintenance terminal

No —S204

Yes

End

Maintaining, by the maintenance
terminal, the traction battery —S205

*Fig. 4*

1

2

3

Acquisition unit

Matching unit

Generation unit

*Fig. 5*

**REFERENCES CITED IN THE DESCRIPTION**

**Patent documents cited in the description**

- CN 105059130
- US 20150268307 A
- US 20170120766 A
- CA 3013651